(19) Europäisches Patentamt
European Patent Office
Office européen des brevets

(11) EP 4 177 311 A1

(12) **EUROPÄISCHE PATENTANMELDUNG**

(43) Veröffentlichungstag:
**10.05.2023 Patentblatt 2023/19**

(21) Anmeldenummer: **22199602.8**

(22) Anmeldetag: **04.10.2022**

(51) Internationale Patentklassifikation (IPC):
***C08L 67/02*** *(2006.01)*

(52) Gemeinsame Patentklassifikation (CPC):
(C-Sets verfügbar)
**C08L 67/02** (Forts.)

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**KH MA MD TN**

(30) Priorität: **04.11.2021 EP 21206388**

(71) Anmelder: **LANXESS Performance Materials GmbH**
**50569 Köln (DE)**

(72) Erfinder:
- **SCHMID-DAEHLING, Claudia**
  **41539 Dormagen (DE)**
- **ENDTNER, Jochen**
  **50679 Köln (DE)**
- **BIENMÜLLER, Matthias**
  **47803 Krefeld (DE)**

(74) Vertreter: **Wichmann, Birgid**
**LANXESS Deutschland GmbH**
**LEX-IPR**
**Kennedyplatz 1**
**50569 Köln (DE)**

(54) **VERWENDUNG VON POLYAMID 6**

(57) Die Erfindung betrifft die Verwendung von Polyamid 6 zur Reduktion der bei 260°C nach ISO 11443 zu bestimmenden Schmelzviskosität und/oder des nach EN ISO 294-1 zu bestimmenden Fülldrucks von Zusammensetzungen und Formmassen, worin auf 100 Massenanteile Poly-$C_1$-$C_6$-alkylenterephthalat 10 bis 115 Massenanteile Glasfasern vorliegen.

(52) Gemeinsame Patentklassifikation (CPC): (Forts.)

C-Sets
**C08L 67/02, C08K 7/14, C08L 23/0869,**
**C08L 77/02**

## Beschreibung

Die Erfindung betrifft die Verwendung von Polyamid 6 zur Reduktion der bei 260°C nach ISO 11443 zu bestimmenden Schmelzviskosität und/oder des Fülldrucks von Zusammensetzungen und Formmassen, worin auf 100 Massenanteile Poly-$C_1$-$C_6$-alkylenterephthalat 10 bis 115 Massenanteile Glasfasern vorliegen.

## Stand der Technik

Neben mechanischen Eigenschaften wie Bruchdehnung, Zugfestigkeit oder Zug-Modul, steht vor allem die Verarbeitbarkeit Polyalkylenterephthalat basierter Zusammensetzungen zur Herstellung von Erzeugnissen für die Elektromobilität im Fokus der jüngsten Forschungen. Insbesondere für die Verarbeitung im Spritzguss werden dabei niedrige Scherviskositäten der zu verarbeitenden Formmassen und niedriger Fülldruck beim Befüllen von Kavitäten im Spritzgießwerkzeug angestrebt.

Aus DE 10 2004 027 872 A1 ist ein Verfahren der Erniedrigung der Schmelzeviskosität von Zusammensetzungen enthaltend A) 99,9 bis 10 Gew.-Teile mindestens eines teilkristallinen thermoplastischen Polyamids B) 0,1 bis 20 Gew.-Teile mindestens eines Copolymerisats aus mindestens einem $\alpha$-Olefin, mit mindestens einem Methacrylsäurester oder Acrylsäureester eines aliphatischen Alkohols, C) 0 bis 70 Gew.-Teile mindestens eines Füll- oder Verstärkungsstoffes, D) 0 bis 30 Gew.-Teile mindestens eines Flammschutzadditivs sowie E) 0 bis 60 Gew.-Teile mindestens eines Elastomermodifikators, F) 0 bis 10 Gew.-% weiterer üblicher Additive bekannt, worin das Copolymerisat B) keine weiteren reaktiven funktionellen Gruppen enthält und der MFI des Copolymerisats B) 100 g/10 min nicht unterschreitet.

EP 1 790 692 A2 betrifft Formmassen auf Basis von Polyestern und löst die Erniedrigung der Viskosität von Polyesterzusammensetzungen wobei der Fülldruck darauf basierender Formmassen erniedrigt wird.

Aus WO 2005/121245 A1 ist dem Fachmann bekannt, dass Mischungen thermoplastischer Polyester mit Copolymerisaten von $\alpha$-Olefinen mit (Meth)acrylsäureestern aliphatischer Alkohole, die einen MFI von 100 g/10 min nicht unterschreiten, zu einer Erniedrigung der Schmelzviskosität der daraus herzustellenden Formmassen führen und im Vergleich zu Formmassen ohne Copolymerisat keine Einbußen - sondern teilweise sogar Verbesserungen bei Eigenschaften wie Schlagzähigkeit, Reißdehnung und Hydrolysebeständigkeit aufweisen. Die Beispiele in WO 2005/121245 A1 zeigen zudem, dass das Copolymerisat sowohl den nach **ISO 527,** als auch den nach **ISO 178** zu bestimmenden Fülldruck beim Spritzgießen reduziert.

Ausgehend von diesem Stand der Technik bestand die Aufgabe der vorliegenden Erfindung darin, die Scherviskosität glasfaserverstärkter Poly-$C_1$-$C_6$-alkylenterephtalat Zusammensetzungen, sowie den Fülldruck von glasfaserverstärkten Poly-$C_1$-$C_6$-alkylenterephtalat Zusammensetzungen bzw. darauf basierenden Formmassen im Spritzguss zu reduzieren, ohne Einbußen bei der Wärmeformbeständigkeit und ohne Nachteile bei mechanischen Kennwerten, insbesondere dem Zug-Modul, der Zugfestigkeit und der Bruchdehnung, im Vergleich zu den Werten der WO 2005/121245 A1**,** zu erhalten. Nachteilig im Sinne der vorliegenden Erfindung wäre eine Abnahme der Wärmeformbeständigkeit zu verarbeitender Formmassen unter 180°C, oder Unterschiede bei allen drei mechanischen Eigenschaften Zug-Modul, Zugfestigkeit und Bruchdehnung von mehr als 10% im Vergleich zu Zusammensetzungen ohne das gemäß der vorliegenden Erfindung einzusetzende Polyamid 6.

Überraschend wurde nämlich nun gefunden, dass lediglich durch Zusatz von Polyamid 6 sowohl die Schmelzviskosität glasfaserverstärkter Poly-$C_1$-$C_6$-alkylenterephtalat Formmassen, insbesondere Polybutylenterephthalat basierter Formmassen, als auch der Fülldruck bei der Anwendung von glasfaserverstärkten Poly-$C_1$-$C_6$-alkylenterephtalat Formmassen im Spritzguss reduziert werden kann. Lediglich durch die Zugabe von Polyamid 6 kann der Fülldruck für die Anwendung glasfaserverstärkter Poly-$C_1$-$C_6$-alkylenterephtalat Formmassen im Spritzguss gegenüber derselben glasfaserverstärkten Zusammensetzung in Gegenwart eines Ethylenbutylacrylat Copolymers aber ohne Polyamid 6 im Vergleich zu den Ergebnissen der WO 2005/121245 A1 noch einmal um mehr als 10% reduziert werden !

Die Schmelze-Volumenfließrate (MVR = Melt Volume-flow Rate) wird in WO 2005/121245 A1 nach **ISO 1133** mittels eines Kapillarrheometers ermittelt. Gegenstand der Untersuchungen zur vorliegenden Erfindung ist die Schmelzviskosität, die im Rahmen der vorliegenden Erfindung bei 260°C nach **ISO 11443** bei der jeweils angegebenen Scherrate bestimmt wird.

Siehe:**https://de.wikipedia.org/wiki/Viskosit%C3%A4t#:~:text=Ohne%20weitere%20A ngaben%20ist%20der%20Widerstand%20des%20Fluids,der%20dynamischen%20Vi skosit%C3%A4t%20und%20der%20kinematischen%20Viskosit%C3%A4t%20unters chieden**

Zur Bestimmung des Fülldrucks gemäß **EN ISO 294-1** für die im Spritzguss zu verarbeitenden Formmassen auf Basis der erfindungsgemäßen Zusammensetzungen wird im Rahmen der vorliegenden Erfindung ein Schulterstab mit einer Geometrie gemäß **ISO 527-2/Typ 1A** verspritzt und der benötigte Druck an einer Spritzgussmaschine aufgezeichnet. Als Massetemperatur wird 260°C und als Werkzeugtemperatur 80°C eingestellt.

Zug-Modul, Zugfestigkeit und Bruchdehnung werden im Rahmen der vorliegenden Erfindung gemäß **ISO 527** gemessen. Der Elastizitätsmodul, auch E-Modul, Zugmodul, Elastizitätskoeffizient, Dehnungsmodul oder Youngscher

Modul, ist ein Materialkennwert aus der Werkstofftechnik, der bei linear-elastischem Verhalten den proportionalen Zusammenhang zwischen Spannung und Dehnung bei der Verformung eines festen Körpers beschreibt. Siehe: **https://www.krv.de/artikel/elastizitaetsmodul-e-modul**

Zur Zugfestigkeit siehe: **https://wiki.polymerservice-merseburg.de/index.php/Zugfestigkeit**

Die Bruchdehnung ist ein spezifischer Werkstoffkennwert, der die Verformungsfähigkeit eines Werkstoffs im plastischen Bereich (auch Duktilität genannt) bis zum Bruch kennzeichnet. Siehe: **https://www.maschinenbau-wissen.de/skript3/werkstofftechnik/metall/23-bruchdehnung**

Gegenstand der vorliegenden Erfindung ist die Verwendung von Polyamid 6 zur Reduktion der bei 260°C nach **ISO 11443** zu bestimmenden Schmelzviskosität und/oder des nach **EN ISO 294-1** zu bestimmenden Fülldrucks von Zusammensetzungen und Formmassen, worin auf 100 Massenanteile Poly-$C_1$-$C_6$-alkylenterephthalat, bevorzugt Polyethylenterephthalat (PET) oder Polybutylenterephthalat (PBT), insbesondere Polybutylenterephthalat, 10 bis 115 Massenanteile Glasfasern vorliegen.

Zur Klarstellung sei angemerkt, dass im Rahmen dieser Erfindung alle nachfolgend aufgeführten, allgemeinen oder in Vorzugsbereichen genannten Definitionen und Parameter in beliebigen Kombinationen umfasst sind. Dies gilt sowohl in Bezug auf die beanspruchten Zusammensetzungen, Formmassen und Erzeugnisse, als auch für erfindungsgemäße Verfahren und Verwendungen. Zitierte Normen gelten in ihrer zum Anmeldetag dieser Erfindung gültigen Fassung.

"Alkyl" bezeichnet im Rahmen der vorliegenden Erfindung eine geradkettige oder verzweigte gesättigte Kohlenwasserstoffgruppe. Entsprechendes gilt für Alkylen. Erfindungsgemäß werden $C_1$-$C_6$-Polyalkylenterephthalate diskutiert. Bevorzugte Alkylengruppen sind Methylen (Me), Ethylen (Et), Propylen, insbesondere n-Propylen und iso-Propylen, Butylen, insbesondere n-Butylen, iso-Butylen, sec-Butylen, tert-Butylen, Pentylen-Gruppen, insbesondere n-Pentylen, iso-Pentylen, neo-Pentylen sowie dem Fachmann bekannte Isomere der Hexylene.

Die Erfindung betrifft zudem ein **Verfahren** zur Reduktion der bei 260°C nach **ISO 11443** zu bestimmenden Schmelzviskosität und/oder des nach **EN ISO 294-1** zu bestimmenden Fülldrucks von Zusammensetzungen und Formmassen worin auf 100 Massenanteile Poly-$C_1$-$C_6$-alkylenterephthalat, bevorzugt Polyethylenterephthalat (PET) oder Polybutylenterephthalat (PBT), insbesondere Polybutylenterephthalat, 10 bis 115 Massenanteile Glasfasern vorliegen durch Zusatz von Polyamid 6, vorzugsweise durch Zusatz von Polyamid 6 in Mengen im Bereich von 0,5 bis 15 Massenanteilen.

Gegenstand der Erfindung sind schließlich auch Zusammensetzungen, Formmassen und Erzeugnisse, enthaltend auf

A) 100 Massenanteile Poly-$C_1$-$C_6$-alkylenterephthalat, bevorzugt Polyethylenterephthalat (PET) oder Polybutylenterephthalat (PBT), insbesondere Polybutylenterephthalat,

B) 10 bis 115 Massenanteile Glasfasern,

C) 0,5 bis 15 Massenanteile Polyamid 6, und

D) 0,5 bis 30 Massenanteile wenigstens eines Copolymerisats aus wenigstens einem $\alpha$-Olefin und wenigstens einen Methacrylsäurester oder Acrylsäureester eines aliphatischen Alkohols.

**Bevorzugte Ausführungsformen der Erfindung**

Die Erfindung betrifft bevorzugt die **Verwendung** von Polyamid 6 zur Reduktion der bei 260°C nach **ISO 11443** zu bestimmenden Schmelzviskosität und/oder des nach **EN ISO 294-1** zu bestimmenden Fülldrucks von Zusammensetzungen und Formmassen worin auf 100 Massenanteile Poly-$C_1$-$C_6$-alkylenterephthalat, bevorzugt Polyethylenterephthalat (PET) oder Polybutylenterephthalat (PBT), insbesondere Polybutylenterephthalat, 10 bis 115 Massenanteile Glasfasern und 0,5 bis 30 Massenanteile wenigstens eines Copolymerisats aus wenigstens einem $\alpha$-Olefin und wenigstens einen Methacrylsäuresters oder Acrylsäureesters eines aliphatischen Alkohols eingesetzt vorliegen.

Die Erfindung betrifft besonders bevorzugt die **Verwendung** von Polyamid 6 zur Reduktion der bei 260°C nach ISO 11443 zu bestimmenden Schmelzviskosität und/oder des nach **EN ISO 294-1** zu bestimmenden Fülldrucks von Zusammensetzungen und Formmassen worin auf 100 Massenanteile Poly-$C_1$-$C_6$-alkylenterephthalat, bevorzugt Polyethylenterephthalat (PET) oder Polybutylenterephthalat (PBT), insbesondere Polybutylenterephthalat, 10 bis 115 Massenanteile Glasfasern und 0,5 bis 30 Massenanteile wenigstens eines Copolymerisats aus wenigstens einem $\alpha$-Olefin und wenigstens einen Methacrylsäuresters oder Acrylsäureesters eines aliphatischen Alkohols eingesetzt vorliegen, wobei das Polyamid 6 zu 0,5 bis 15 Massenanteilen eingesetzt wird.

Die Erfindung betrifft bevorzugt ein **Verfahren** zur Reduktion der bei 260°C nach **ISO 11443** zu bestimmenden

Schmelzviskosität und/oder des nach **EN ISO 294-1** zu bestimmenden Fülldrucks von Zusammensetzungen und Formmassen worin auf 100 Massenanteile Poly-$C_1$-$C_6$-alkylenterephthalat, bevorzugt Polyethylenterephthalat (PET) oder Polybutylenterephthalat (PBT), insbesondere Polybutylenterephthalat, 10 bis 115 Massenanteile Glasfasern und 0,5 bis 30 Massenanteile wenigstens eines Copolymerisats aus wenigstens einem $\alpha$-Olefin und wenigstens einen Methacrylsäurester oder Acrylsäureester eines aliphatischen Alkohols vorliegen, durch Zusatz von Polyamid 6, vorzugsweise durch Zusatz von Polyamid 6 in Mengen im Bereich von 0,5 bis 15 Massenanteilen.

In einer weiteren bevorzugten Ausführungsform enthalten die erfindungsgemäßen Zusammensetzungen, Formmassen und Erzeugnisse zusätzlich zu den Komponenten A), B), C) und D) noch E) wenigstens ein weiteres von den Komponenten B), C) und D) verschiedenes **Additiv,** vorzugsweise in Mengen im Bereich von 0,01 bis 80 Massenanteilen, bezogen auf 100 Massenanteile der Komponente A).

Die erfindungsgemäßen Zusammensetzungen, die in der Kunststofftechnik zusammenfassend auch als Formmassen bezeichnet werden, fallen bei der Bearbeitung der einzelnen Komponenten vorzugsweise als Granulat, in Strangform oder als Pulver an. Die Zubereitung von erfindungsgemäßen Formmassen erfolgt durch Mischen der erfindungsgemäßen Zusammensetzungen in wenigstens einem Mischwerkzeug, vorzugsweise in einem Compounder, besonders bevorzugt in einem gleichsinnig drehenden Zweiwellenextruder. Der Mischvorgang der einzelnen Komponenten zur Herstellung erfindungsgemäßer Zusammensetzungen in Form von Pulvern, Granulaten oder in Strangform wird in der Kunststofftechnik auch als Compoundierung bezeichnet. Hierdurch werden als Zwischenprodukte, auf den erfindungsgemäßen Zusammensetzungen basierende, Formmassen erhalten. Diese Formmassen - auch als thermoplastische Formmassen bezeichnet - können entweder ausschließlich aus den Komponenten A), B), C) und D) bestehen, oder aber zusätzlich zu diesen Komponenten noch wenigstens eine weitere Komponente E) enthalten. In einem weiteren Schritt werden die erfindungsgemäßen Formmassen dann als Matrixmaterial einem Spritzguss oder einer Extrusion, bevorzugt einem Spritzguss, unterzogen, um daraus erfindungsgemäße Erzeugnisse herzustellen.

**Poly-$C_1$-$C_6$-alkylenterephthalate (Komponente A)**

Poly-$C_1$-$C_6$-alkylenterephthalate können nach verschiedenen Verfahren hergestellt werden, aus unterschiedlichen Bausteinen synthetisiert werden und im speziellen Anwendungsfall allein oder in Kombination mit Verarbeitungshilfsmitteln, Stabilisatoren, polymeren Legierungspartnern (z. B. Elastomeren) oder auch Verstärkungsmaterialien (wie z. B. mineralischen Füllstoffen oder Glasfasern) und gegebenenfalls weiteren Additiven, zu Werkstoffen mit speziell eingestellten Eigenschaftskombinationen ausgerüstet werden. Geeignet sind auch Blends mit Anteilen von anderen Polymeren, wobei gegebenenfalls ein oder mehrere Kompatibilisatoren eingesetzt werden können. Die Eigenschaften der Polymere können nach Bedarf durch Zusatz von Elastomeren verbessert werden.

Bevorzugte Poly-$C_1$-$C_6$-alkylenterephthalate lassen sich aus Terephthalsäure oder ihren reaktionsfähigen Derivaten und aliphatischen oder cycloaliphatischen Diolen mit 2 bis 10 C-Atomen nach bekannten Methoden herstellen **(**Kunststoff-Handbuch, Bd. VIII, S. 695 ff, Karl Hanser Verlag, München 1973**).**

Bevorzugte Poly-$C_1$-$C_6$-alkylenterephthalate enthalten mindestens 80Mol-%, vorzugsweise mindestens 90Mol-%, bezogen auf die Dicarbonsäure, Terephthalsäurereste und mindestens 80Mol-%, vorzugsweise mindestens 90Mol-%, bezogen auf die Diolkomponente, 1,4-Cyclohexandimethanol- und/oder Ethylenglykol- und/oder Propandiol-1,3- (im Falle von Polypropylenterephthalat) und/oder Butandiol-1,4-reste.

Bevorzugte Poly-$C_1$-$C_6$-alkylenterephthalate können neben Terephthalsäureresten bis zu 20Mol-% Reste anderer aromatischer Dicarbonsäuren mit 8 bis 14 C-Atomen oder Reste aliphatischer Dicarbonsäuren mit 4 bis 12 C-Atomen enthalten, insbesondere Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure, Cyclohexandicarbonsäure.

Bevorzugte Poly-$C_1$-$C_6$-alkylenterephthalate enthalten neben 1,4-Cyclohexandimethanol bzw. Ethylenglykol bzw. 1,3-Propandiol bzw. 1,4-Butandiol-1,4 bis zu 20Mol-% andere aliphatische Diole mit 3 bis 12 C-Atomen oder bis zu 20Mol-% cycloaliphatische Diole mit 6 bis 21 C-Atomen enthalten, bevorzugt Reste von Propandiol-1,3, 2-Ethylpropandiol-1,3, Neopentylglykol, Pentan-diol-1,5, Hexandiol-1.6, 3-Methylpentandiol-2,4, 2-Methylpentandiol-2,4, 2,2,4-Trimethylpentandiol-1,3, 2,2,4-Trimethylpentandiol-1,5, 2-Ethylhexandiol-1,3, 2,2-Diethylpropandiol-1,3, Hexandiol-2,5, 1,4-Di-($\beta$-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-ß-hydroxyethoxyphenyl)-propan und 2,2-bis-(4-hydroxypropoxyphenyl)-propan.

Besonders bevorzugte Poly-$C_1$-$C_6$-alkylenterephthalate werden allein aus Terephthalsäure und deren reaktionsfähigen Derivaten, insbesondere deren Dialkylestern, und 1,4-Cyclohexandimethanol und/oder Ethylenglykol und/oder 1,3-Propandiol und/oder 1,4-Butandiol hergestellt, insbesondere bevorzugt sind Poly-1,4-cyclohexandimethanolterephthalat, Polyethylenterephthalat und Polybutylenterephthalat und Mischungen derselben.

Bei den Poly-$C_1$-$C_6$-alkylenterephthalaten kann es sich auch um Rezyklate handeln. Unter Rezyklaten versteht man im Allgemeinen:

1) sogenanntes Post Industrial Rezyklat (auch Pre Consumer Rezyklat genannt): hierbei handelt es sich um Produktionsabfälle bei der Polykondensation, bei der Compoundierung (z. B. offspec-Ware) oder bei der Verarbeitung z. B. Angüsse bei der Spritzgussverarbeitung, Anfahrware bei der Spritzgussverarbeitung oder Extrusion oder Randabschnitte von extrudierten Platten oder Folien.

2) Post Consumer Rezyklat: hierbei handelt es sich um Kunststoffartikel, die nach der Nutzung durch den Endverbraucher gesammelt und aufbereitet werden. Der mengenmäßig bei weitem dominierende Artikel sind blasgeformte PET-Flaschen für Mineralwasser, Softdrinks und Säfte.

Erfindungsgemäß einzusetzende PET-Rezyklate aus recyclierten PET-Flaschen werden bevorzugt nach einem Verfahren gemäß DE 103 24 098 A1**,** WO 2004/009315 A1 oder nach WO 2007/116022 A2 erhalten.

Bevorzugte Poly-$C_1$-$C_6$-alkylenterephthalate sind auch Copolyester, die aus mindestens zwei der obengenannten Säurekomponenten und/oder aus mindestens zwei der obengenannten Alkoholkomponenten hergestellt werden. Besonders bevorzugte Copolyester sind Poly-(ethylenglykol/butandiol-1,4)-terephthalate.

Bevorzugte Poly-$C_1$-$C_6$-alkylenterephthalate weisen eine intrinsische Viskosität im Bereich von 30 bis 150 $cm^3/g$, besonders bevorzugt im Bereich von 40 bis 130 $cm^3/g$, ganz besonders bevorzugt im Bereich von 50 bis 100 $cm^3/g$ auf, jeweils gemessen in Phenol/o-Dichlorbenzol (1:1 Gew.-Teile) bei 25°C. Die intrinsische Viskosität *iV,* auch als Staudinger-Index oder Grenzviskosität bezeichnet, ist nach der Mark-Houwink-Gleichung proportional zur mittleren Molekülmasse und ist die Extrapolation der Viskositätszahl VN für den Fall verschwindender Polymerkonzentrationen. Sie kann aus Messreihen oder durch die Verwendung geeigneter Näherungsverfahren (z. B. Billmeyer) abgeschätzt werden. Die VN [ml/g] erhält man aus der Messung der Lösungsviskosität im Kapillar-Viskosimeter, vorzugsweise Ubbelohde-Viskosimeter. Die Lösungsviskosität ist ein Maß für das mittlere Molekulargewicht eines Kunststoffs. Die Bestimmung erfolgt an gelöstem Polymer, wobei unterschiedliche Lösungsmittel, vorzugsweise Ameisensäure, m-Kresol, Tetrachlorethan, Phenol, 1,2-Dichlorbenzol, und Konzentrationen zum Einsatz kommen. Durch die Viskositätszahl VN ist eine Kontrolle der Verarbeitungs- und Gebrauchseigenschaften von Kunststoffen möglich. Eine thermische Beanspruchung des Polymers, Alterungsvorgänge oder das Einwirken von Chemikalien, Bewitterung und Licht können durch vergleichende Messungen untersucht werden. Das Verfahren ist für gängige Kunststoffe genormt, im Rahmen der vorliegenden Erfindung gemäß **DIN ISO 1628-5** für Polyester. Siehe hierzu auch: **http://de.wikipedia.org/wiki/Viskosimetrie** und **"http://de.wikipedia.org/wiki/Mark-Houwink-Gleichung".**

Die erfindungsgemäß einzusetzenden Poly-$C_1$-$C_6$-alkylenterephthalate können auch im Gemisch mit anderen Polyestern und/oder weiteren Polymeren eingesetzt werden.

Den erfindungsgemäß einzusetzenden Poly-$C_1$-$C_6$-alkylenterephthalate können während der Compoundierung übliche Additive, insbesondere Entformungsmittel, in der Schmelze zugemischt werden. Der Fachmann versteht unter Compoundierung (aus dem Englischen: *Compound* = "Mischung") einen Begriff aus der Kunststofftechnik, welcher mit Kunststoffaufbereitung gleichzusetzen ist und den Veredelungsprozess von Kunststoffen durch Beimischung von Zuschlagstoffen (Füllstoffe, Additive usw.) zur gezielten Optimierung der Eigenschaftsprofile beschreibt. Die Compoundierung erfolgt vorzugsweise in Extrudern, besonders bevorzugt in gleichläufigen Doppelschneckenextrudern, gegenläufigen Doppelschneckenextrudern, Planetwalzenextrudern oder Co-Knetern und umfasst die Verfahrensoperationen Fördern, Aufschmelzen, Dispergieren, Mischen, Entgasen und Druckaufbau.

Bevorzugt wird wenigstens ein Poly-$C_1$-$C_6$-alkylenterephthalat auszuwählen aus Polyethylenterephthalat [CAS Nr. 25038-59-9] oder Polybutylenterephthalat [CAS Nr. 24968-12-5], insbesondere Polybutylenterephthalat (PBT) eingesetzt. Insbesondere bevorzugt ist Polybutylenterephthalat (PBT) [CAS Nr. 24968-12-5], das unter der Marke Pocan® bei der Lanxess Deutschland GmbH, Köln, erhältlich ist.

**Glasfasern (Komponente B)**

Gemäß **"http://de.wikipedia.org/wiki/Faser-Kunststoff-Verbund"** unterscheidet man bei erfindungsgemäß einzusetzenden Glasfasern geschnittene Fasern, auch als Kurzfasern bezeichnet, mit einer Länge im Bereich von 0,1 bis 1mm, Langfasern mit einer Länge im Bereich von 1 bis 50mm und Endlosfasern mit einer Länge L > 50mm. Kurzfasern werden in der Spritzgusstechnik eingesetzt und können direkt mit einem Extruder verarbeitet werden. Langfasern können ebenfalls noch in Extrudern verarbeitet werden. Sie finden im großen Umfang Einsatz beim Faserspritzen. Langfasern werden häufig Duroplasten als Füllstoff zugemischt. Endlosfasern werden als Rovings oder Gewebe in faserverstärkten Kunststoffen eingesetzt. Erzeugnisse mit Endlosfasern erzielen die höchsten Steifigkeits- und Festigkeitswerte. Des Weiteren werden gemahlene Glasfasern angeboten, deren Länge nach der Vermahlung typischerweise im Bereich von 70 bis 200$\mu$m liegt. Auch gemahlene Glasfasern können erfindungsgemäß eingesetzt werden.

Erfindungsgemäß bevorzugt werden geschnittene Langglasfasern mit einer Ausgangslänge im Bereich von 1 bis 50mm, besonders bevorzugt im Bereich von 1 bis 10mm, ganz besonders bevorzugt im Bereich von 2 bis 7mm eingesetzt. Die Ausgangslänge bezeichnet die durchschnittliche Länge der Glasfasern wie sie vor einer Compoundierung

der erfindungsgemäßen Zusammensetzung(en) zu einer erfindungsgemäßen Formmasse vorliegen. Die als Komponente B) einzusetzenden Glasfasern können bedingt durch die Verarbeitung, insbesondere Compoundierung, zur Formmasse oder zum Erzeugnis in der Formmasse oder im Erzeugnis einen kleineren d97- bzw. d50-Wert aufweisen, als die ursprünglich eingesetzten Glasfasern. So liegt der arithmetische Mittelwert der Glasfaserlänge nach der Verarbeitung häufig nur noch im Bereich von 150 μm und 300 μm.

Die Ermittlung der Glasfaserlänge und Glasfaserlängenverteilung erfolgt im Rahmen der vorliegenden Erfindung im Falle verarbeiteter Glasfasern gemäß **ISO 22314,** welche zunächst eine Veraschung der Proben bei 625°C vorsieht. Anschließend wird die Asche auf einen mit demineralisiertem Wasser bedeckten Objektträger in einer geeigneten Kristallisierschale gegeben und die Asche ohne Wirkung von mechanischen Kräften im Ultraschallbad verteilt. Der nächste Schritt sieht die Trocknung im Ofen bei 130 °C vor und anschließend erfolgt mit Hilfe von lichtmikroskopischen Aufnahmen die Ermittlung der Glasfaserlänge. Dazu werden von drei Aufnahmen mindestens 100 Glasfasern ausgemessen, so dass insgesamt 300 Glasfasern zur Ermittlung der Länge herangezogen werden. Die Glasfaserlänge kann dabei entweder als arithmetischer Mittelwert $l_n$ nach Gleichung

$$l_n = \frac{1}{n} \cdot \sum_{i}^{n} l_i$$

mit $l_i$ = Länge der iten Faser und n = Anzahl der gemessenen Fasern berechnet und in geeigneter Weise als Histogramm dargestellt oder bei einer angenommenen Normalverteilung der gemessenen Glasfaserlängen $l$ mit Hilfe der Gauß-Funktion nach Gleichung

$$f(l) = \frac{1}{\sqrt{2\pi} \cdot \sigma} \cdot e^{-\frac{1}{2} \cdot \left(\frac{l - l_c}{\sigma}\right)^2}$$

bestimmt werden. Dabei sind $l_c$ und $\sigma$ spezielle Kennwerte der Normalverteilung; $l_c$ ist der mittlere Wert und $\sigma$ die Standardabweichung (siehe: M. Schoßig, Schädigungsmechanismen in faserverstärkten Kunststoffen, 1, 2011, Vieweg und Teubner Verlag, Seite 35, ISBN 978-3-8348-1483-8**).** Nicht in eine Kunststoffmatrix eingebundene Glasfasern werden hinsichtlich ihrer Längen gemäß obiger Methoden, jedoch ohne die Aufbereitung durch Veraschung und Abtrennung von der Asche analysiert.

Erfindungsgemäß einzusetzende Glasfasern [CAS Nr. 65997-17-3)] haben vorzugsweise einen Faserdurchmesser im Bereich von 7 bis 18μm, besonders bevorzugt im Bereich von 9 bis 15μm, der durch wenigstens eine dem Fachmann zur Verfügung stehende Möglichkeit zu ermitteln ist, insbesondere zu ermitteln durch μ-Röntgen-Computertomographie in Analogie zu **"**Quantitative Messung von Faserlängen und - verteilung in faserverstärkten Kunststoffteilen mittels μ-Röntgen-Computertomographie", J.KASTNER, et al. DGZfP-Jahrestagung 2007 - Vortrag 47**.** Die als Komponente B) einzusetzenden Glasfasern werden bevorzugt als Endlosfasern oder als geschnittene oder als gemahlene Glasfasern zugesetzt.

In einer bevorzugten Ausführungsform werden einzusetzende Glasfasern mit einem geeigneten Schlichtesystem oder einem Haftvermittler bzw. Haftvermittlersystem, besonders bevorzugt auf Silanbasis, ausgerüstet.

Bevorzugte Haftvermittler auf Silanbasis für die Vorbehandlung von Glasfasern sind Silanverbindungen der allgemeinen Formel (I)

$$(X-(CH_2)_q)_k-Si-(O-CrH_{2r+1})_{4-k} \qquad (I)$$

in der die Substituenten folgende Bedeutung haben:

X: $NH_2$-, HO-,

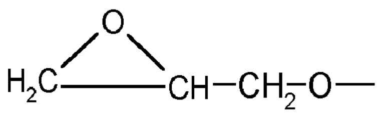

q: eine ganze Zahl von 2 bis 10, bevorzugt 3 bis 4,

r: eine ganze Zahl von 1 bis 5, bevorzugt 1 bis 2,

k: eine ganze Zahl von 1 bis 3, bevorzugt 1.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Glasfasern werden die Silanverbindungen bevorzugt in Mengen im Bereich von 0,05 bis 2 Gew.-%, besonders bevorzugt im Bereich von 0,25 bis 1,5 Gew.-% und insbesondere im Bereich von 0,5 bis 1 Gew.-% bezogen auf 100 Gew,-% des Füll- bzw. Verstärkungsstoffs, insbesondere der Glasfasern, zur Oberflächenbeschichtung eingesetzt.

**Polyamid 6 (Komponente C)**

Bei dem erfindungsgemäß einzusetzenden Polyamid 6 handelt es sich vorzugsweise um ein semikristallines Polyamid, dessen Schmelzenthalpie gemäß DE 10 2011 084 519 A1 im Bereich von 4 bis 25 J/g, gemessen mit der DSC-Methode gemäß **ISO 11357** beim 2. Aufheizen und Integration des Schmelzpeaks, liegt.

Die im Rahmen der vorliegenden Anmeldung benutzte Kennzeichnung der Polyamide entspricht internationaler Norm bzw. **DIN 7728.** Wird nur eine Zahl angegeben, wie im Falle des PA 6, so bedeutet dies, dass von einer $\alpha,\omega$-Aminocarbonsäure bzw. von dem davon abgeleiteten Lactam, im Falle des PA 6 also dem $\varepsilon$-Caprolactam, ausgegangen worden ist; im Übrigen sei verwiesen auf H. Domininghaus, Die Kunststoffe und ihre Eigenschaften, Seiten 272 ff., VDI-Verlag, 1976**.**

Bevorzugt wird ein niedrigviskoses Polyamid 6 mit einer Viskositätszahl bestimmt in einer 0,5 gew.-%igen Lösung in 96 gew.-%iger Schwefelsäure bei 25°C gemäß **ISO 307** im Bereich von 80 bis 135 ml/g, besonders bevorzugt im Bereich von 90 bis 130 ml/g, ganz besonders bevorzugt im Bereich von 90 bis 125 ml/g, insbesondere besonders bevorzugt im Bereich von 95 bis 115 ml/g eingesetzt.

In einer besonders bevorzugten Ausführungsform wird ein Polyamid 6 mit einer Viskositätszahl bestimmt in einer 0,5 gew.-%igen Lösung in 96 gew.-%iger Schwefelsäure bei 25°C gemäß **ISO 307** im Bereich von 95 bis 115 ml/g eingesetzt.

Insbesondere bevorzugt wird Polyamid 6 das durch hydrolytische Polymerisation von $\varepsilon$-Caprolactam hergestellt wurde, eingesetzt. Erfindungsgemäß einzusetzendes Polyamid 6 kann als Durethan® B26, bei der Lanxess Deutschland GmbH, Köln, bezogen werden.

**Copolymerisat (Komponente D)**

Bevorzugt sind Copolymerisate **wenigstens** eines $\alpha$-Olefins mit **wenigstens** einem Methacrylsäurester oder Acrylsäureester eines aliphatischen Alkohols.

Besonders bevorzugt sind Copolymerisate **aus einem** $\alpha$-Olefin **mit einem** Methacrylsäurester oder Acrylsäureester eines aliphatischen Alkohols.

Ganz besonders bevorzugt sind Copolymerisate **aus einem** $\alpha$-Olefin **und einem Acrylsäureester eines aliphatischen Alkohols.**

Insbesondere bevorzugt sind dabei Copolymerisate bei denen das $\alpha$-Olefin **aus Ethen** aufgebaut ist und der Methacrylsäurester oder Acrylsäureester als Alkoholkomponente lineare oder verzweigte Alkylgruppen mit 6 bis 20 C-Atomen enthält.

Insbesondere besonders bevorzugt sind dabei Copolymerisate bei denen das $\alpha$-Olefin **Ethen** ist und der **Acrylsäureester** als Alkoholkomponente lineare oder verzweigte Alkylgruppen mit 6 bis 20 C-Atomen enthält.

Insbesondere ganz besonders bevorzugt wird als Copolymerisat wenigstens eines $\alpha$-Olefins und wenigstens eines Acrylsäureesters ein Copolymerisat aus Ethen und Acrylsäure-(2-ethyl)-hexylester oder ein Copolymerisat aus Ethen und Acrylsäurebutylester eingesetzt.

Erfindungsgemäß einzusetzende Copolymerisate zeichnen sich neben der Zusammensetzung auch durch das niedrige Molekulargewicht aus. Dementsprechend sind vor allem Copolymerisate bevorzugt, die einen MFI-Wert gemessen bei 190°C und einer Belastung von 2,16kg von mindestens 100g / 10 min, bevorzugt von mindestens 150g / 10 min, besonders bevorzugt von mindestens 300g/10min aufweisen. Der MFI, Melt-Flow-Index, dient zur Charakterisierung des Flusses einer Schmelze eines Thermoplasten und unterliegt den Normen **ISO 1133** oder **ASTM D 1238.** Der MFI bzw. alle Angaben zum MFI im Rahmen der vorliegenden Erfindung beziehen sich bzw. wurden einheitlich nach **ISO 1133** bei 190°C und einem Prüfgewicht von 2,16 kg gemessen bzw. bestimmt. Erfindungsgemäß insbesondere bevorzugt wird ein Ethylenebutylacrylate Copolymer eingesetzt, das als Lotryl® 28BA700T bei SK Functional Polymer erhältlich ist.

**Additive (Komponente E)**

Gegebenenfalls oder in bevorzugter Ausführungsform enthalten erfindungsgemäße Zusammensetzungen, Formmassen und Erzeugnisse wenigstens ein von den Komponenten A), B), C) und D) verschiedenes Additiv als Komponente E). Bevorzugte Additive der Komponente E) sind Gleit- und Entformungsmittel, zu Komponente B) zusätzliche Füll- und/oder Verstärkungsstoffe, UV-Stabilisatoren, Farbmittel, kettenverlängernd wirkende Additive, Weichmacher, zu Komponente D) verschiedene Fließhilfsmittel, Thermostabilisatoren, Antioxidantien, Gammastrahlenstabilisatoren, Hydrolysestabilisatoren, Elastomermodifikatoren, Antistatika, Emulgatoren, Nukleierungsmittel, Verarbeitungshilfsmittel, Antitropfmittel sowie Flammschutzmittel. Die Additive der Komponente E) können alleine, oder in Mischung bzw. in Form von Masterbatchen eingesetzt werden. Vorzugsweise wird als zu Komponente B) zusätzlicher Füll- und/oder Verstärkungsstoff wenigstens einer aus der Gruppe Glimmer, Silikat, Quarz, insbesondere Quarzmehl, Titandioxid, Wollastonit, Nephelinsyenit, Kaolin, amorphe Kieselsäuren, Magnesiumcarbonat, Kreide, Feldspat, Metallsulfate, von Komponente B) verschiedene Glasfasern, Glaskugeln, Glasmehl und/oder faserförmige Füllstoffe und/oder Verstärkungsstoffe auf der Basis von Kohlenstofffasern eingesetzt.

Bevorzugt werden mineralische teilchenförmige Füllstoff- und/oder Verstärkungsstoffe auf der Basis von Glimmer, Silikat, Quarz, Wollastonit, Kaolin, amorphe Kieselsäuren, Magnesiumcarbonat, Kreide oder Feldspat eingesetzt. Besonders bevorzugt werden ferner auch nadelförmige mineralische Füllstoffe eingesetzt. Unter nadelförmigen mineralischen Füll- und/oder Verstärkungsstoffen wird erfindungsgemäß ein mineralischer Füllstoff mit stark ausgeprägtem nadelförmigen Charakter verstanden. Bevorzugt weist der nadelförmige mineralische Füll- und/oder Verstärkungsstoff ein Länge : Durchmesser - Verhältnis im Bereich von 2:1 bis 35:1, besonders bevorzugt im Bereich von 3:1 bis 19:1, am meisten bevorzugt im Bereich von 4:1 bis 12:1 auf. Die mittlere Teilchengröße d50 der erfindungsgemäß einzusetzenden nadelförmigen Mineralien liegt bevorzugt bei kleiner 20 $\mu$m, besonders bevorzugt bei kleiner 15 $\mu$m, insbesondere bevorzugt bei kleiner 10 $\mu$m bestimmt mit einem CILAS GRANULOMETER gemäß **ISO 13320:2009** mittels Laserbeugung.

Die gegebenenfalls oder in bevorzugter Ausführungsform als Komponente E) einzusetzenden und von Komponente B) verschiedenen Füll- und/oder Verstärkungsstoffe können bedingt durch die Verarbeitung zur Formmasse bzw. zu einem Erzeugnis in diesen einen kleineren d97- bzw. d50-Wert aufweisen, als die ursprünglich eingesetzten Füll- bzw. Verstärkungsstoffe bzw. Glasfasern. Sie können einzeln oder als Mischung aus zwei oder mehr unterschiedlichen Füllstoffen und/oder Verstärkungsstoffen eingesetzt werden.

Als Komponente E) und von Komponente B) verschiedene einzusetzende Füll- und/oder Verstärkungsstoffe können in einer bevorzugten Ausführungsform oberflächenmodifiziert sein, besonders bevorzugt mit einem Haftvermittler bzw. Haftvermittlersystem, insbesondere bevorzugt auf Epoxidbasis. Die Vorbehandlung ist jedoch nicht unbedingt erforderlich.

Vorzugsweise werden auch die als Komponente E) einzusetzenden Füll- und/oder Verstärkungsstoffe, mit einem geeigneten Schlichtesystem oder einem Haftvermittler bzw. Haftvermittlersystem, besonders bevorzugt auf Silanbasis, ausgerüstet. Bevorzugte Haftvermittler auf Silanbasis für die Vorbehandlung sind Silanverbindungen der allgemeinen Formel (I)

$$(X\text{-}(CH_2)_q)_k\text{-}Si\text{-}(O\text{-}C_rH_{2r+1})_{4-k} \qquad (I)$$

in der die Substituenten folgende Bedeutung haben:

X: $NH_2$-, HO-,

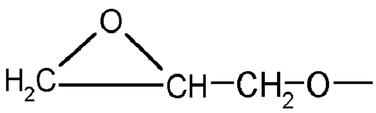

q: eine ganze Zahl von 2 bis 10, bevorzugt 3 bis 4,
r: eine ganze Zahl von 1 bis 5, bevorzugt 1 bis 2,
k: eine ganze Zahl von 1 bis 3, bevorzugt 1.

Insbesondere bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Als Komponente E) einzusetzendes **Gleit- und Entformungsmittel** wird wenigstens eines aus der Reihe der langkettigen Fettsäuren, der Salze langkettiger Fettsäuren, der Esterderivate langkettiger Fettsäuren sowie Montanwachse ausgewählt.

Bevorzugte langkettige Fettsäuren sind Stearinsäure oder Behensäure. Bevorzugte Salze der langkettigen Fettsäuren sind Ca- oder Zn-Stearat. Bevorzugte Esterderivate langkettiger Fettsäuren sind solche auf Basis von Pentaerythritol, insbesondere $C_{16}$-$C_{18}$ Fettsäureester des Pentaerythritols [CAS Nr. 68604-44-4] oder [CAS Nr. 85116-93-4].

Montanwachse im Sinne der vorliegenden Erfindung sind Mischungen aus geradkettigen, gesättigten Carbonsäuren mit Kettenlängen von 28 bis 32 C Atomen. Erfindungsgemäß besonders bevorzugt werden Gleit- und/oder Entformungsmittel aus der Gruppe der Ester gesättigter oder ungesättigter aliphatischer Carbonsäuren mit 8 bis 40 C-Atomen mit aliphatischen gesättigten Alkoholen mit 2 bis 40 C-Atomen sowie Metallsalze gesättigter oder ungesättigter aliphatischer Carbonsäuren mit 8 bis 40 C-Atomen eingesetzt, wobei Pentaerythritoltetrastearat, Calciumstearat [CAS Nr. 1592-23-0] und/oder Ethylenglycoldimontanat, hier insbesondere Licowax® E [CAS-Nr. 74388-22-0] der Fa. Clariant, Muttenz, Basel ganz besonders bevorzugt ist und Pentaerythritoltetrastearat [CAS-Nr. 115-83-3] z. B. erhältlich als Loxiol® P861 der Fa. Emery Oleochemicals GmbH, Düsseldorf, Deutschland insbesondere ganz besonders bevorzugt ist.

Als Komponente E) einzusetzende **UV-Stabilisatoren** werden bevorzugt substituierte Resorcine, Salicylate, Benzotriazole, Triazin-Derivate oder Benzophenone eingesetzt.

Als Komponente E) einzusetzende **Farbmittel** werden bevorzugt organische Pigmente, bevorzugt Phthalocyanine, Chinacridone, Perylene sowie Farbstoffe, bevorzugt Nigrosin oder Anthrachinone, weiterhin anorganische Pigmente, insbesondere Titandioxid (sofern nicht bereits als Füllstoff eingesetzt), Metallsulfate (sofern nicht bereits als Füllstoff eingesetzt) Ultramarinblau, Eisenoxid, Zinksulfid oder Ruß eingesetzt werden.

Für das erfindungsgemäß als Pigment bevorzugt einzusetzende **Titandioxid** kommen Titandioxid-Pigmente in Frage, deren Grundkörper nach dem Sulfat (SP)- oder Chlorid (CP)-Verfahren hergestellt sein können und die Anatas und / oder Rutilstruktur, bevorzugt Rutilstruktur haben. Der Grundkörper muss nicht stabilisiert sein, jedoch ist eine spezielle Stabilisierung bevorzugt: beim CP-Grundkörper durch eine Al- Dotierung von 0,3-3,0 Gew.-% (gerechnet als $Al_2O_3$) und einem Sauerstoffüberschuss in der Gasphase bei der Oxidation des Titantetrachlorids zu Titandioxid von mindestens 2%; beim SP-Grundkörper durch eine Dotierung z. B. mit Al, Sb, Nb oder Zn. Besonders bevorzugt ist eine "leichte" Stabilisierung mit Al, bzw. bei höheren Al-Dotierungsmengen eine Kompensation mit Antimon. Bei der Verwendung von Titandioxid als Weißpigment in Farben und Lacken, Kunststoffen usw. ist bekannt, dass durch UV-Absorption erzeugte unerwünschte photokatalytische Reaktionen zur Zersetzung des pigmentierten Materials führen. Dabei absorbieren Titandioxid-Pigmente im nahen ultravioletten Bereich Licht, so dass Elektron-Loch-Paare entstehen, welche hochreaktive Radikale auf der Titandioxid-Oberfläche erzeugen. Die gebildeten Radikale haben in organischen Medien einen Bindemittelabbau zur Folge. Erfindungsgemäß bevorzugt wird zur Erniedrigung der Photoaktivität des Titandioxids dieses anorganisch nachbehandelt, besonders bevorzugt mit Oxiden von Si und/oder Al und/oder Zr und/oder durch den Einsatz von Sn-Verbindungen.

Bevorzugt ist die Oberfläche von pigmentärem Titandioxid mit amorphen Auffällungen von Oxidhydraten der Verbindungen $SiO_2$ und/oder $Al_2O_3$ und/oder Zirkonoxid bedeckt. Die $Al_2O_3$-Hülle erleichtert die Pigmentdispergierung in die Polymermartrix, die $SiO_2$-Hülle erschwert den Ladungsaustausch an der Pigmentoberfläche und verhindert dadurch den Polymerabbau.

Erfindungsgemäß wird das Titandioxid bevorzugt mit hydrophilen und/oder hydrophoben organischen Beschichtungen versehen, insbesondere mit Siloxanen oder Polyalkoholen.

Erfindungsgemäß bevorzugt als **Farbmittel** der Komponente E) einzusetzendes Titandioxid [CAS Nr. 13463-67-7] weist eine mittlere Teilchengröße d50 im Bereich von 90 bis 2000nm, besonders bevorzugt im Bereich von 200 bis 800nm auf. Die mittlere Teilchengröße d50 ist der aus der Teilchengrößenverteilung ermittelte Wert, zu dem 50Gew.-% der Teilchen einen äquivalenten Kugeldurchmesser kleiner als diesen d50 Wert aufweisen. Die zugrunde liegende Norm ist **ISO 13317-3.**

Die Angaben der Teilchengrößenverteilung bzw. der mittleren Teilchengröße beim Titandioxid beziehen sich auf sogenannte oberflächenbasierte Teilchengrößen, jeweils vor Einarbeitung in die thermoplastische Formmasse. Die Teilchengrößenbestimmung erfolgt erfindungsgemäß durch Laserdiffraktometrie, siehe C.M. Keck, Moderne Pharmazeutische Technologie 2009, Freie Universität Berlin, Kapitel 3.1. oder QUANTACHROME PARTIKELWELT NO 6, Juni 2007, Seiten 1 bis 16**.**

Kommerziell erhältliches Titandioxid sind beispielsweise Kronos® 2230, Kronos® 2233, Kronos® 2225 und Kronos® vlp7000 der Fa. Kronos, Dallas, USA.

Vorzugsweise wird das als Pigment einzusetzende Titandioxid in Mengen im Bereich von 0,1 bis 60 Massenanteilen, besonders bevorzugt in Mengen im Bereich von 1 bis 35 Massenanteilen, ganz besonders bevorzugt in Mengen im Bereich von 2 bis 20 Massenanteilen, jeweils bezogen auf 100 Massenanteile der Komponente A), eingesetzt.

Als Komponente E) einzusetzende **Nukleierungsmittel** sind vorzugsweise Natrium- oder Calciumphenylphosphinat, Aluminiumoxid, Siliziumdioxid oder Talkum. Besonders bevorzugt wird als Nukleierungsmittel Talkum [CAS-Nr.14807-96-6] eingesetzt, insbesondere mikrokristallines Talkum. Talkum, auch als Talk bezeichnet, ist ein Schichtsilikat mit der chemischen Zusammensetzung $Mg_3[Si_4O_{10}(OH)_2]$, das je nach Modifikation als Talk-1A im triklinen oder als Talk-2M im monoklinen Kristallsystem kristallisiert **(http://de.wikipedia.org/wiki/Talkum).** Erfindungsgemäß einzusetzendes Talkum kann beispielsweise als Mistron® R10 von Imerys Talc Group, Toulouse, Frankreich (Rio Tinto Group) bezogen werden.

Bevorzugt können als Komponente E) aber auch **di- oder mehrfunktionelle verzweigend oder kettenverlängernd wirkende Additive,** enthaltend mindestens zwei und höchstens 15 verzweigend oder kettenverlängernd wirkende funktionelle Gruppen pro Molekül, eingesetzt werden. Als verzweigende bzw. kettenverlängende Additive kommen niedermolekulare oder oligomere Verbindungen in Frage, die über mindestens zwei und höchstens 15 verzweigend oder kettenverlängernd wirkende funktionelle Gruppen pro Molekül verfügen, welche mit primären und/oder sekundären Aminogruppen, und/oder Amidgruppen und/oder Carbonsäuregruppen reagieren können. Kettenverlängernd wirkende funktionelle Gruppen sind bevorzugt Isocyanate, Alkohole, blockierte Isocyanate, Epoxide, Maleinsäureanhydrid, Oxazoline, Oxazine, Oxazolone, wobei Epoxide bevorzugt sind.

Insbesondere bevorzugte di- oder mehrfunktionelle verzweigend oder kettenverlängernd wirkende Additive sind Diepoxide auf Basis Diglycidylether (Bisphenol und Epichlorhydrin), auf Basis von Aminepoxidharz (Anilin und Epichlorhydrin), auf Basis von Diglycidylester (cycloaliphatische Dicarbonsäuren und Epichlorhydrin) einzeln oder in Mischungen sowie 2,2-Bis[p-hydroxy-phenyl]-propan-diglycidylether, Bis-[p-(N-methyl-N-2,3-epoxy-propylamino)-phenyl]-methan sowie epoxidierte Fettsäureester des Glycerins, enthaltend mindestens zwei und höchstens 15 Epoxidgruppen pro Molekül.

Besonders bevorzugte di- oder mehrfunktionelle verzweigend oder kettenverlängernd wirkende Additive sind Glycidylether, ganz besonders bevorzugt Bisphenol A-Diglycidylether [CAS Nr. 98460-24-3] oder epoxidierte Fettsäureester des Glycerins, sowie auch ganz besonders bevorzugt epoxidiertes Sojaöl [CAS Nr. 8013-07-8].

Zur Verzweigung/Kettenverlängerung sind zudem besonders bevorzugt geeignet:

1. Poly- bzw. Oligoglycidyl- oder Poly-(ß-methylglycidyl)-ether erhältlich durch Umsetzung einer Verbindung mit mindestens zwei freien alkoholischen Hydroxygruppen und/oder phenolischen Hydroxygruppen und einem geeignet substituierten Epichlorhydrin unter alkalischen Bedingungen, oder in Anwesenheit eines sauren Katalysators und anschließender Alkalibehandlung.

   Poly- bzw. Oligoglycidyl- oder Poly-(ß-methylglycidyl)-ether leiten sich bevorzugt ab von acyclischen Alkoholen, insbesondere Ethylenglykol, Diethylenglykol und höhereren Poly-(oxyethylen)-glykolen, Propan-1,2-diol, Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylpropan, Bistrimethylolpropan, Pentaerythrit, Sorbit sowie von Polyepichlorhydrinen.

   Sie leiten sich aber auch bevorzugt ab von cycloaliphatischen Alkoholen, insbesondere 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne, insbesondere N,N-Bis-(2-hydroxyelhyl)anilin oder p,p'-Bis-(2-hydroxyethyl-amino)-diphenylmethan.

   Die Epoxidverbindungen können sich bevorzugt auch von einkernigen Phenolen ableiten, insbesondere von Resorcin oder Hydrochinon, oder sie basieren auf mehrkernigen Phenolen, insbesondere auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd, insbesondere Phenol-Novolake.

2. Poly- bzw. Oligo-(N-glycidyl)-Verbindungen ferner erhältlich durch Dehydrochlorierung der Reaktionsprodukte von Epichlorhydrin mit Aminen, die mindestens zwei Aminowasserstoffatome enthalten. Bei diesen Aminen handelt es sich bevorzugt um Anilin, Toluidin, n-Butylamin, Bis-(4-aminophenyl)methan, m-Xylylendiamin oder Bis-(4-methylaminophenyl)-methan, aber auch N,N,O-Triglycidyl-m-aminophenyl oder N,N,O-Triglycidyl-p-aminophenol.
   Zu den Poly-(N-glycidyl)-Verbindungen zählen aber auch bevorzugt N,N'-Diglycidylderivate von Cycloalkylenharnstoffen, besonders bevorzugt Ethylenharnstoff oder 1,3-Propylenharnstoff, und N,N'-Diglycidylderivate von Hydantoinen, insbesondere 5,5-Dimethylhydantoin.

3. Poly- bzw. Oligo-(S-glycidyl)-Verbindungen, insbesondere Di-S-glycidylderivate, die sich von Dithiolen, bevorzugt Ethan-1,2-dithiol oder Bis-(4-mercaptomethylphenyl)-ether, ableiten.

4. Epoxidierte Fettsäureester des Glycerins, insbesondere epoxidierte Pflanzenöle. Sie werden durch Epoxidierung der reaktionsfähigen Olefingruppen von Triglyceriden ungesättigter Fettsäuren erhalten. Die Herstellung epoxidierter Fettsäureester des Glycerins kann ausgehend von ungesättigten Fettsäureestern des Glycerins, bevorzugt von Pflanzenölen, und organischen Peroxycarbonsäuren (Prileschajew-Reaktion) erfolgen. Verfahren zur Herstellung

von epoxidierten Pflanzenölen sind zum Beispiel in Smith, March, March's Advanced Organic Chemistry (5. Auflage, Wiley-Interscience, New York, 2001) beschrieben. Bevorzugte epoxidierte Fettsäureester des Glycerins sind Pflanzenöle. Erfindungsgemäß besonders bevorzugter epoxidierter Fettsäureester des Glycerins ist epoxidiertes Sojaöl [CAS Nr. 8013-07-8].

5. Mit Glycidylmethacrylat modifizierte Styrol-Acrylat Polymere, erhältlich durch Polymerisation von Styrol, Glycidylmethacrylat und Acrylsäure und/oder Methacrylsäure.

Bevorzugt als Komponente E) einzusetzende **Weichmacher** sind Phthalsäuredioctylester, Phthalsäuredibenzylester, Phthalsäurebutylbenzylester, Kohlenwasserstofföle oder N-(n-Butyl)benzolsulfonamid.

Bevorzugt als Komponente E) einzusetzende **Elastomermodifikatoren** umfassen u.a. ein oder mehrere Pfropfpolymerisate von

E.1 5 bis 95 Gew.-%, vorzugsweise 30 bis 90 Gew.-%, wenigstens eines Vinylmonomeren auf

E.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt <-20°C. Die Gewichtsprozente beziehen sich in diesem Fall auf 100 Gew.-% Komponente E).

Die Pfropfgrundlage E.2 hat im allgemeinen eine mittlere Teilchengröße (d50-Wert) im Bereich von 0,05 bis 10μm, vorzugsweise im Bereich von 0,1 bis 5μm, besonders bevorzugt im Bereich von 0,2 bis 1μm.

Monomere E.1 sind vorzugsweise Gemische aus

E.1.1 50 bis 99Gew.-% Vinylaromaten und/oder kernsubstituierten Vinylaromaten, insbesondere Styrol, α-Methylstyrol, p-Methylstyrol, p-Chlorstyrol, und/oder Methacrylsäure-($C_1$-$C_8$)-Alkylester, insbesondere Methylmethacrylat, Ethylmethacrylat und

E.1.2 1 bis 50 Gew.-% Vinylcyanide, insbesondere ungesättigte Nitrile wie Acrylnitril und Methacrylnitril, und/oder (Meth)Acrylsäure-($C_1$-$C_8$)-alkylester, insbesondere Methylmethacrylat, Glycidylmethacrylat, n-Butylacrylat, t-Butylacrylat, und/oder Derivate, insbesondere Anhydride und Imide ungesättigter Carbonsäuren, insbesondere Maleinsäureanhydrid oder N-Phenyl-Maleinimid. Die Gewichtsprozente beziehen sich in diesem Fall auf 100 Gew.-% Komponente E).

Bevorzugte Monomere E.1.1 sind ausgewählt aus mindestens einem der Monomere Styrol, α-Methylstyrol und Methylmethacrylat, bevorzugte Monomere E.1.2 sind ausgewählt aus mindestens einem der Monomere Acrylnitril, Maleinsäureanhydrid, Glycidylmethacrylat und Methylmethacrylat.

Besonders bevorzugte Monomere sind E.1.1 Styrol und E.1.2 Acrylnitril.

Für die in den Elastomermodifikatoren einzusetzenden Pfropfpolymerisate geeignete Pfropfgrundlagen E.2 sind beispielsweise Dienkautschuke, EPDM-Kautschuke, also solche auf Basis Ethylen/Propylen und gegebenenfalls Dien, ferner Acrylat-, Polyurethan-, Silikon-, Chloropren und Ethylen/Vinylacetat-Kautschuke. EPDM steht für Ethylen-Propylen-Dien-Kautschuk.

Bevorzugte Pfropfgrundlagen E.2 sind Dienkautschuke, insbesondere auf Basis Butadien, Isopren etc. oder Gemische von Dienkautschuken oder Copolymerisate von Dienkautschuken oder deren Gemischen mit weiteren copolymerisierbaren Monomeren, insbesondere gemäß E.1.1 und E.1.2, mit der Maßgabe, dass die Glasübergangstemperatur der Komponente E.2 bei <10°C, vorzugsweise bei <0°C, besonders bevorzugt bei <-10°C liegt.

Besonders bevorzugte Propfgrundlagen E.2 sind ABS-Polymerisate (Emulsions-, Masse- und Suspensions-ABS) wobei ABS für Acrylnitril-Butadien-Styrol steht, wie sie z. B. in der DE-A 2 035 390 oder in der DE-A 2 248 242 bzw. in Ullmann, Enzyklopädie der Technischen Chemie, Bd. 19 (1980), S. 280 **ff.** beschrieben sind.

Die Elastomermodifikatoren bzw. Pfropfpolymerisate werden durch radikalische Polymerisation, bevorzugt durch Emulsions-, Suspensions-, Lösungs- oder Massepolymerisation, insbesondere durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch

(Co)Polymerisation der Pfropfmonomere in Gegenwart der Pfropfgrundlage gewonnen werden und bei der Aufarbeitung mit anfallen.

Ebenfalls geeignete Acrylatkautschuke basieren auf Pfropfgrundlagen E.2 die vorzugsweise Polymerisate aus Acrylsäurealkylestern, gegebenenfalls mit bis zu 40 Gew.-%, bezogen auf E.2 anderen polymerisierbaren, ethylenisch ungesättigten Monomeren. Zu den bevorzugten polymerisierbaren Acrylsäureestern gehören $C_1$-$C_8$-Alkylester, vorzugsweise Methyl-, Ethyl-, Butyl-, n-Octyl- und 2-Ethylhexylester; Halogenalkylester, vorzugsweise Halogen-Ci-Cs-alkylester, vorzugsweise Chlorethylacrylat, Glycidylester sowie Mischungen dieser Monomeren. Dabei sind Propfpolymerisate mit Butylacrylat als Kern und Methylmethacrylaten als Schale, insbesondere Paraloid® EXL2300, Fa. Dow Corning Corporation, Midland Michigan, USA, besonders bevorzugt.

Weitere bevorzugt geeignete Pfropfgrundlagen gemäß E.2 sind Silikonkautschuke mit pfropfaktiven Stellen, wie sie in DE-A 3 704 657**,** DE-A 3 704 655 **,** DE-A 3 631 540 und DE-A 3 631 539 beschrieben werden.

Bevorzugte Propfpolymerisate mit einem Silikonanteil sind solche, die Methylmethacrylat oder Styrol-Acrylnitril als Schale und ein Silikon/Acrylat-Propf als Kern aufweisen. Unter solchen mit Styrol-Acrylnitril als Schale kann z. B. Metablen® SRK200 eingesetzt werden. Unter solchen mit Methylmethacrylat als Schale können z. B. Metablen® S2001, Metablen® S2030 und/oder Metablen® SX-005 eingesetzt werden. Besonders bevorzugt wird Metablen® S2001 eingesetzt. Die Produkte mit dem Handelsnamen Metablen® sind erhältlich bei Mitsubishi Rayon Co., Ltd., Tokio, Japan.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, bevorzugt Ethylenglykoldimethacrylat, Allylmethacrylat; mehrfach ungesättigte heterocyclische Verbindungen, bevorzugt Trivinyl- und Triallylcyanurat; polyfunktionelle Vinylverbindungen, bevorzugt Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5 Gew.-%, insbesondere 0,05 bis 2 Gew.-%, bezogen auf 100 Gew.-% der Pfropfgrundlage E.2.

Bei cyclischen vernetzenden Monomeren mit mindestens 3 ethylenisch ungesättigten Gruppen ist es vorteilhaft, die Menge auf unter 1 Gew.-% bezogen auf 100 Gew.-% der Pfropfgrundlage E.2 zu beschränken.

Bevorzugte "andere" polymerisierbare, ethylenisch ungesättigte Monomere, die neben den Acrylsäureestern gegebenenfalls zur Herstellung der Pfropfgrundlage E.2 dienen können, sind Acrylnitril, Styrol, $\alpha$-Methylstyrol, Acrylamide, Vinyl-$C_1$-$C_6$-alkylether, Methylmethacrylat, Glycidylmethacrylat, Butadien. Bevorzugte Acrylatkautschuke als Pfropfgrundlage E.2 sind Emulsionspolymerisate, die einen Gelgehalt von mindestens 60 Gew.-% aufweisen.

Neben Elastomermodifikatoren, die auf Propfpolymeren beruhen, können ebenfalls nicht auf Pfropfpolymeren basierende Elastomermodifikatoren eingesetzt werden, die Glasübergangstemperaturen < 10°C, vorzugsweise < 0°C, besonders bevorzugt < -20°C aufweisen. Bevorzugt gehören hierzu Elastomere mit einer Blockcopolymerstruktur sowie weiterhin thermoplastisch aufschmelzbare Elastomere, insbesondere EPM-, EPDM- und/oder SEBS-Kautschuke (EPM = Ethylen-Propylen-Copolymer, EPDM = Ethylen-Propylen-Dien-Kautschuk und SEBS = Styrol-Ethen-Buten-Styrol Copolymer).

Bevorzugt als Komponente E) einzusetzende **Flammschutzmittel** sind **halogenfrei.**

Zu den als Komponente E) bevorzugt einzusetzenden phosphorhaltigen Flammschutzmitteln gehören beispielsweise phosphorhaltige Verbindungen aus der Gruppe der organische Metallphosphinate, insbesondere Metall-diethylphosphinate, der anorganischen Metallphosphinate, insbesondere Aluminiumphosphinat und Zinkphosphinat, der mono- und oligomeren Phosphor- und Phosphonsäureester, insbesondere Triphenylphosphat (TPP), Resorcinol-bis-(diphenylphosphat) (RDP), Bisphenol-A-bis-diphenylphosphat (BDP) einschließlich Oligomere, Polyphosphonate, insbesondere Bisphenol A-diphenyl methylphosphonate copolymere wie z. B. Nofia™ HM1100 [CAS Nr. 68664-06-2] der Fa. FRX Polymers, Chelmsford, USA), ferner Derivate der 9,10-Dihydro-9-oxa-10-phosphaphenanthren-10-oxide (DOPO-Derivate)], Phosphonatamine, Metallphosphonate, insbesondere Aluminiumphosphonat und Aluminiumalkylphosphonate sowie Zinkphosphonat und Zinkalkylphosphonate, ferner Phosphinoxide und Phosphazene. Besonders bevorzugte Phosphazene sind dabei Phenoxyphosphazenoligomere. Weitere als Komponente E) bevorzugt einzusetzenden phosphorhaltigen Flammschutzmittel sind Melaminpyrophosphat, Melaminpolyphosphat, Melamin-poly(aluminiumphosphat), Melamin-poly(zinkphosphat) sowie Umsetzungsprodukte von Melem, Melam, Melon mit kondensierten Phosphorsäuren.

Ebenso können phosphorfreie stickstoffhaltige Flammschutzmittel einzeln oder im Gemisch als weitere Flammschutzmittel der Komponente E) eingesetzt werden. Bevorzugte stickstoffhaltige Flammschutzmittel sind die Reaktionsprodukte aus Trichlortriazin, Piperazin und Morpholin gemäß CAS Nr. 1078142-02-5, insbesondere MCA PPM Triazin HF der Fa. MCA Technologies GmbH, Biel-Benken, Schweiz, ferner Melamincyanurat und Kondensationsprodukte des Melamins, insbesondere Melem, Melam, Melon bzw. höherkondensierte Verbindungen dieses Typs.

Bevorzugte anorganische stickstoffhaltige Verbindungen sind Ammoniumsalze.

Auch andere hier nicht speziell erwähnte Flammschutzmittel oder Flammschutzmittelsynergisten können als Komponente E) zum Einsatz kommen. Hierzu zählen auch rein anorganische Phosphorverbindungen, insbesondere roter Phosphor oder Borphosphathydrat. Ferner können auch mineralische Flammschutzadditive wie beispielsweise Magnesiumhydroxid oder Salze aliphatischer und aromatischer Sulfonsäuren, insbesondere Metallsalze der 1-Perfluorbutansulfonsäure eingesetzt werden. Infrage kommen ferner Flammschutzmittelsynergisten aus der Gruppe der sauerstoff-, stickstoff- oder schwefelhaltigen Metallverbindungen worin Metall für Antimon, Zink, Molybdän, Calcium, Titan, Magnesium oder Bor steht, bevorzugt Antimontrioxid, Antimonpentoxid, Natriumantimonat, Zinkoxid, Zinkborat, Zinkstannat, Zinkhydroxystannat, Zinksulfid, Molybdänoxid, sofern nicht bereits als Farbmittel eingesetzt Titandioxid, Magnesiumcarbonat, Calciumcarbonat, Calciumoxid, Titannitrid, Bornitrid, Magnesiumnitrid, Zinknitrid, Calciumborat, Magnesiumborat oder deren Mischungen.

Weitere bevorzugt als Komponente E) einzusetzende und geeignete Flammschutzadditive sind Kohlebildner, besonders bevorzugt Poly-(2,6-diphenyl-1,4-phenyl)ether, insbesondere Poly(2,6-dimethyl-1,4-phenylen)ether [CAS Nr. 25134-01-4], Phenol-Formaldehydharze, Polycarbonate, Polyimide, Polysulfone, Polyethersulfone oder Polyetherketone, sowie Antitropfmittel, insbesondere Tetrafluorethylenpolymerisate. Die Tetrafluorethylenpolymerisate können in Reinform oder aber in Kombination mit anderen Harzen, bevorzugt Styrolacrylnitril (SAN), oder Acrylaten, vorzugsweise Methylmethacrylat bzw. Butylacrylat, eingesetzt werden.

Sofern es der Einsatz erfordert, können auch **halogenhaltige Flammschutzmittel** eingesetzt werden. Hierzu zählen handelsübliche organische Halogenverbindungen mit oder ohne Synergisten. Als halogenhaltige, insbesondere bromierte und chlorierte Verbindungen seien bevorzugt Ethylen-1,2-bistetrabromphthalimid, Decabromdiphenylethan, Tetrabrombisphenol-A-epoxyoligomer, Tetrabrombisphenol-A-oligocarbonat, Tetrachlorbisphenol-A-oligocarbonat, Polypentabrombenzylacrylat, bromiertes Polystyrol und bromierte Polyphenylenether genannt.

Die als Komponente E) zusätzlich einzusetzenden Flammschutzmittel können in Reinform, sowie über Masterbatche oder Kompaktate dem Polyalkylentherephthalat oder Polycycloalkylenterephthalat zugesetzt werden.

Als Komponente E) bevorzugt einzusetzende **Thermostabilisatoren** sind ausgewählt aus der Gruppe der schwefelhaltigen Stabilisatoren, insbesondere Sulfide, Dialkylthiocarbamaten oder Thiodipropionsäuren, außerdem solche ausgewählt aus der Gruppe der Eisensalze und der Kupfersalze, hier insbesondere Kupfer(I)iodid, die bzw. das bevorzugt in Kombination mit Kaliumiodid und/oder Natriumhypophosphit $NaH_2PO_2$ eingesetzt werden bzw. wird, ferner sterisch gehinderte Amine, insbesondere Tetrametyhlpiperidin-Derivate, aromatische sekundäre Amine, insbesondere Diphenylamine, Hydrochinone, substituierte Resorcine, Salicylate, Benzotriazole und Benzophenone, ferner sterisch gehinderte Phenole und aliphatisch oder aromatisch substituierte Phosphite sowie verschieden substituierte Vertreter dieser Gruppen.

Unter den sterisch gehinderten Phenolen werden bevorzugt solche mit mindestens einem 3-Tert.-butyl-4-hydroxy-5-methylphenyl- und/oder mindestens einem 3,5-Di-(tert.-butyl-4-hydroxyphenyl)-Baustein eingesetzt, wobei 1,6-Hexandiol-bis[3-(3,5-di-tert.-butyl-4-hydroxyphenyl)-propionat] [CAS Nr. 35074-77-2] (Irganox® 259 der Fa. BASF SE, Ludwigshafen, Deutschland), Pentaerythril-tetrakis-[3-(3,5-di-tert.-butyl-4-hydroxyphenyl)-propionat] [CAS Nr. 6683-19-8] (Irganox® 1010 der Fa. BASF SE) und 3,9-Bis[2-[3-(3-tert-butyl-4-hydroxy-5-methylphenyl)propionyloxy]-1,1-dimethylethyl]-2,4,8,10-tetraoxaspiro[5.5]undecane [CAS Nr. 90498-90-1] (ADK Stab® AO 80) besonders bevorzugt sind. ADK Stab® AO 80 ist ein Handelsprodukt der Fa. Adeka-Palmerole SAS, Mulhouse, Frankreich.

Unter den aliphatisch oder aromatisch substituierten Phosphiten wird bevorzugt Bis(2,4-dicumylphenyl)-pentaerythritol-diphosphit [CAS Nr. 154862-43-8], das z. B. von der Fa. Dover Chemical Corp., Dover, USA unter dem Handelsnamen Doverphos® S9228 angeboten wird und Tetrakis(2,4-di-tert-butylphenyl)-1,1-biphenyl-4,4'-diylbisphosphonit [CAS Nr. 38613-77-3] eingesetzt, das z. B. als Hostanox® P-EPQ von der Fa. Clariant International Ltd., Muttenz, Schweiz bezogen werden kann.

**Insbesondere bevorzugte Verwendungen**

Die Erfindung betrifft besonders bevorzugt die **Verwendung** von Polyamid 6 zur Reduktion der bei 260°C nach ISO 11443 zu bestimmenden Schmelzviskosität und/oder des nach EN ISO 294-1 zu bestimmenden Fülldrucks von Zusammensetzungen und Formmassen, worin auf 100 Massenanteile Polybutylenterephthalat, 10 bis 115 Massenanteile Glasfasern und 0,5 bis 30 Massenanteile Ethylenbutylacrylat Copolymer vorliegen.

Die Erfindung betrifft insbesondere die **Verwendung** von 0,5 bis 15 Massenanteilen Polyamid 6 zur Reduktion der bei 260°C nach ISO 11443 zu bestimmenden Schmelzviskosität und/oder des nach EN ISO 294-1 zu bestimmenden Fülldrucks von Zusammensetzungen und Formmassen, worin auf 100 Massenanteile Polybutylenterephthalat, 10 bis 115 Massenanteile Glasfasern und 0,5 bis 30 Massenanteile Ethylenbutylacrylat Copolymer vorliegen.

**Insbesondere bevorzugte Verfahren**

Die Erfindung betrifft besonders bevorzugt ein Verfahren zur Reduktion der bei 260°C nach ISO 11443 zu bestimmenden Schmelzviskosität und/oder des nach EN ISO 294-1 zu bestimmenden Fülldrucks von Zusammensetzungen und Formmassen worin 100 Massenanteile Polybutylenterephthalat und 10 bis 115 Massenanteile Glasfasern sowie und 0,5 bis 30 Massenanteile Ethylenbutylacrylat Copolymer vorliegen, indem Polyamid 6, vorzugsweise Polyamid 6 in Mengen im Bereich von 0,5 bis 15 Massenanteilen, zugegeben wird.

**Insbesondere bevorzugte Zusammensetzungen, Formmassen und Erzeugnisse**

In bevorzugter Ausführungsform betrifft die vorliegende Erfindung zudem Zusammensetzungen, Formmassen und Erzeugnisse enthaltend auf A) 100 Massenanteile Polybutylenterepthalat, B) 10 bis 115 Massenanteile Glasfasern, C) 0,5 bis 15 Massenanteile Polyamid 6 und D) 0,5 bis 30 Massenanteile Ethylenbutylacrylat Copolymer.

Bevorzugte Erzeugnisse sind Erzeugnisse für die Elektro- oder Elektronikindustrie, besonders bevorzugt Erzeugnisse für die Elektromobilität.

Die Zubereitung erfindungsgemäßer Formmassen für eine weitere Nutzung, insbesondere im Spritzguss oder in einer Extrusion, erfolgt durch Mischen der einzusetzenden Komponenten in wenigstens einem Mischwerkzeug, vorzugsweise Compounder. Hierdurch werden als Zwischenprodukte, auf den erfindungsgemäßen Zusammensetzungen basierende, Formmassen erhalten. Aus den Formmassen werden schließlich durch geeignete Verfahren Erzeugnisse hergestellt.

Die vorliegende Erfindung betrifft aber auch ein Verfahren zur Herstellung von Erzeugnissen, bevorzugt für die Elektroindustrie, Elektromobilität oder Elektronikindustrie, besonders bevorzugt elektronischer oder elektrischer Baugruppen und Komponenten, indem man erfindungsgemäße Zusammensetzungen zu einer Formmasse vermischt, in Form eines Strangs austrägt, bis zur Granulierfähigkeit abkühlt und granuliert und schließlich als Matrixmaterial einem Spritzguss oder einer Extrusion, bevorzugt einem Spritzguss, unterzieht. In einer Ausführungsform kann die Formmasse unmittelbar dem Spritzguss oder einer Extrusion zugeführt werden, ohne dass sie zu einem Strang ausgetragen und granuliert wird.

Bevorzugt erfolgt das Vermischen bei Temperaturen im Bereich von 240 bis 310°C, bevorzugt im Bereich von 260 bis 300°C, besonders bevorzugt im Bereich von 270 bis 295°C in der Schmelze. Insbesondere bevorzugt wird hierzu ein Zweiwellenextruder eingesetzt.

In einer Ausführungsform wird das Granulat, das die erfindungsgemäße Zusammensetzung enthält, getrocknet, bevorzugt bei Temperaturen im Bereich um 120°C im Vakuumtrockenschrank oder im Trockenlufttrockner für eine Zeitdauer im Bereich von 2h, bevor es als Matrixmaterial dem Spritzguss oder einem Extrusionsverfahren zwecks Herstellung erfindungsgemäßer Erzeugnisse unterzogen wird.

Die Verfahren des Spritzgusses sowie der Extrusion thermoplastischer Formmassen sind dem Fachmann bekannt. Erfindungsgemäße Verfahren zur Herstellung von Polyester basierten Erzeugnissen durch Extrusion oder Spritzguss arbeiten bei Schmelzetemperaturen im Bereich von 240 bis 330°C, bevorzugt im Bereich von 260 bis 300°C, besonders bevorzugt im Bereich von 270 bis 290°C sowie gegebenenfalls zusätzlich bei Drücken von maximal 2500 bar, bevorzugt bei Drücken von maximal 2000 bar, besonders bevorzugt bei Drücken von maximal 1500 bar und ganz besonders bevorzugt bei Drücken von maximal 750 bar.

Bei der sequentiellen Coextrusion werden zwei unterschiedliche Materialien in alternierender Folge hintereinander ausgestoßen. Auf diese Weise entsteht ein Vorformling mit in Extrusionsrichtung abschnittsweise unterschiedlicher Materialzusammensetzung. Es können bestimmte Artikelabschnitte durch entsprechende Materialauswahl mit spezifisch erforderlichen Eigenschaften ausgestattet werden, beispielsweise für Artikel mit weichen Enden und hartem Mittelteil oder integrierten weichen Faltenbalg-Bereichen (Thielen, Hartwig, Gust, "Blasformen von Kunststoffhohlkörpern", Carl Hanser Verlag, München 2006, Seiten 127-129).

Beim Spritzguss wird eine die erfindungsgemäßen Zusammensetzungen enthaltende Formmasse, bevorzugt in Granulatform, in einem beheizten zylindrischen Hohlraum aufgeschmolzen (plastifiziert) und als Spritzmasse unter Druck in einen temperierten Hohlraum gespritzt. Nach dem Abkühlen (Erstarren) der Masse wird das Spritzgussteil entformt.

Man unterscheidet

1. Plastifizieren / Aufschmelzen

2. Einspritzphase (Füllvorgang)

3. Nachdruckphase (wegen thermischer Kontraktion bei der Kristallisation)

4. Entformen.

Siehe hierzu **http://de.wikipedia.org/wiki/Spritzgie%C3%9Fen.** Eine Spritzgießmaschine besteht aus einer Schließeinheit, der Spritzeinheit, dem Antrieb und der Steuerung. Zur Schließeinheit gehören feste und bewegliche Aufspannplatten für das Werkzeug, eine Stirnplatte sowie Säulen und Antrieb der beweglichen Werkzeugaufspannplatte (Kniehebelgelenk oder hydraulische Schließeinheit).

Eine Spritzeinheit umfasst den elektrisch beheizbaren Zylinder, den Antrieb der Schnecke (Motor, Getriebe) und die Hydraulik zum Verschieben der Schnecke und Spritzeinheit. Die Aufgabe der Spritzeinheit besteht darin, das Pulver bzw. das Granulat aufzuschmelzen, zu dosieren, einzuspritzen und nachzudrücken (wegen Kontraktion). Das Problem des Rückflusses der Schmelze innerhalb der Schnecke (Leckströmung) wird durch Rückstromsperren gelöst.

Im Spritzgießwerkzeug wird dann die einströmende Schmelze gelöst, gekühlt und somit das zu fertigende Erzeugnis gefertigt. Notwendig dazu sind immer zwei Werkzeughälften. Beim Spritzguss unterscheidet man folgende Funktionskomplexe:

- Angusssystem
- Formbildende Einsätze
- Entlüftung
- Maschinen- und Kraftaufnahme
- Entformungssystem und Bewegungsübertragung
- Temperierung

Im Gegensatz zum Spritzguss wird bei der Extrusion ein endlos geformter Kunststoffstrang aus einer erfindungsgemäßen Formmasse im Extruder eingesetzt, wobei der Extruder eine Maschine zur Herstellung thermoplastischer Formstücke ist. Verwiesen sei hier auf http://de.wikipedia.org/wiki/Extrusionsblasformen. Man unterscheidet Einschneckenextruder und Doppelschneckenextruder sowie die jeweiligen Untergruppen konventioneller Einschneckenextruder, förderwirksamer Einschneckenextruder, gegenläufiger Doppelschneckenextruder und gleichläufiger Doppelschneckenextruder.

Extrusionsanlagen bestehen aus Extruder, Werkzeug, Nachfolgeeinrichtung, Extrusionsblasformen. Extrusionsanlagen zum Herstellen von Profilen bestehen aus: Extruder, Profil-Werkzeug, Kalibrierung, Kühlstrecke, Raupen- und Rollenabzug, Trennvorrichtung und Kipprinne.

Die vorliegende Erfindung betrifft folglich auch halogenfreie Erzeugnisse, insbesondere kriechstromfeste, halogenfreie Erzeugnisse, erhältlich durch Extrusion, bevorzugt Profil-Extrusion, oder Spritzguss der aus den erfindungsgemäßen Zusammensetzungen erhältlichen Formmassen.

**Beispiele**

Zum Nachweis der erfindungsgemäß beschriebenen Verbesserungen bezüglich Schmelzviskosität und/oder Fülldruck wurden zunächst durch Compoundierung entsprechende Formmassen angefertigt. Die einzelnen Komponenten wurden hierzu in einem Zweiwellenextruder (ZSK 26 Mega Compounder der Fa. Coperion Werner & Pfleiderer (Stuttgart, Deutschland)) bei Temperaturen im Bereich von 260 bis 290°C gemischt, als Strang ausgetragen, bis zur Granulierfähigkeit abgekühlt und granuliert. Nach dem Trocknen (in der Regel 2h bei 120°C im Vakuumtrockenschrank) erfolgte die Verarbeitung des Granulates zu Prüfkörpern.

Die Prüfkörper für die in **Tab.1** aufgeführten Untersuchungen wurden auf einer Spritzgießmaschine des Typs Arburg 320-210-500 bei einer Massetemperatur von 260°C und einer Werkzeugtemperatur von 80°C verspritzt.

**Edukte:**

**Komponente A):** Lineares Polybutylenterephthalat (Pocan® B 1300, Handelsprodukt der Lanxess Deutschland GmbH, Leverkusen, Deutschland) mit einer Intrinsischen Viskosität von 93 $cm^3/g$ (gemessen in Phenol: 1,2-Dichlorbenzol = 1:1 bei 25°C)

**Komponente B)** Glasfaser (CS 7967 (26/1493) D, Handelsprodukt der Lanxess Deutschland GmbH, Leverkusen, Deutschland)

**Komponente C):** Polyamid 6 (Durethan® B26, Handelsprodukt der Lanxess Deutschland GmbH, Leverkusen, Deutschland)

**Komponente D):** Ethylenbutylacrylat Copolymer (Lotryl® 28BA700T, SK Functional Polymer)

**Komponente(n) E):**

E1) Nukleierungsmittel: Talkum

E2) Thermostabilisator: : Additiv DP0001 [CAS Nr. 649560-74-7], Lanxess Deutschland GmbH

**Tab. 1**

| | | Vgl. 1 | Vgl. 2, Bsp. gemäß WO 2005/121245A1 | Bsp. 1 | Vgl. 3 | Bsp. 2 | Vgl. 4 | Bsp. 3 |
|---|---|---|---|---|---|---|---|---|
| Komponente A) | [Massenanteile] | 100 | 100 | 100 | 100 | 100 | 100 | 100 |
| Komponente B) | [Massenanteile] | 27,5 | 27,5 | 27,5 | 12 | 12 | 48 | 48 |
| Komponente C) | [Massenanteile] | | | 3 | | 2 | | 3 |
| Komponente D) | [Massenanteile] | | 8 | 8 | 5 | 5 | 9,5 | 9,5 |
| Komponente E1) | [Massenanteile] | 0,1 | 0,1 | 0,1 | 0,1 | 0,1 | 0,2 | 0,2 |
| Komponente E2) | [Massenanteile] | 0,1 | 0,1 | 0,1 | 0,1 | 0,1 | 0,2 | 0,2 |
| | | | | | | | | |
| Fülldruck Schulterstab | [bar] | 192 | 123 | 105 | 153 | 134 | 156 | 125 |
| Schmelzviskosität (260°C, 1000 $s^{-1}$) | [Pas] | 157 | 94 | 81 | 117 | 105 | 113 | 106 |
| CTI | [V] | 325 | 425 | 525 | 375 | 600 | 475 | 500 |
| Wärmeformbeständigkeit | [°C] | 202 | 199 | 205 | 175 | 182 | 205 | 207 |
| Zug-Modul | [MPa] | 7015 | 6530 | 6595 | 4354 | 4510 | 9095 | 9627 |
| Zugfestigkeit | [MPa] | 118 | 105 | 103 | 83 | 81 | 123 | 124 |
| Bruchdehnung | [%] | 3,9 | 3,4 | 3,4 | 4,5 | 4,2 | 3 | 3 |

Zur Bestimmung des Fülldrucks, der über EN ISO 294-1 definiert ist, wurde ein Schulterstab mit einer Geometrie gemäß ISO 527-2/Typ 1A verspritzt und der benötigte Druck an der Spritzgussmaschine aufgezeichnet. Als Massetemperatur wurde 260°C und als Werkzeugtemperatur 80°C eingestellt.

Die Schmelzviskosität wurde bei 260°C nach ISO 11443 bei der angegebenen Scherrate bestimmt.

Die Wärmeformbeständigkeit wurde an 80 mm x 10 mm x 4 mm Prüfkörpern gemäß ISO 75-2 Methode A (Biegespannung von 1,80 MPa) bestimmt.

Zug-Modul, Zugfestigkeit und Bruchdehnung wurden nach ISO 527 gemessen.

Die Kriechstrombeständigkeit wird durch den CTI (Comparative Tracking Index) beschrieben und wurde gemäß dem in der Norm ISO 60112:2003 beschriebenen Verfahren bestimmt. Die Oberfläche des Prüfkörpers (60 mm x 40 mm x 4 mm) wurde über zwei Elektroden einer elektrischen Spannung ausgesetzt, während die Oberfläche zwischen den Elektroden mit Tropfen einer Elektrolytlösung behandelt wurde, die Staub und Feuchtigkeit simulierte. Der CTI ist die höchste Spannung, bei der es nach 50 Tropfen zu keinem Ausfall (Kurzschluss oder Zündung) kam.

**Tab. 1** zeigt insbesondere beim Vergleich von Bsp. 1 mit Vgl. 2, einem Beispiel gemäß WO 2005/121245A1**,** dass durch Zugabe von Polyamid 6 sowohl die Schmelzviskosität, als auch der Fülldruck noch einmal deutlich reduziert werden konnten.

## Patentansprüche

1. Verwendung von Polyamid 6 zur Reduktion der bei 260°C nach ISO 11443 zu bestimmenden Schmelzviskosität und/oder des nach EN ISO 294-1 zu bestimmenden Fülldrucks von Zusammensetzungen und Formmassen worin auf 100 Massenanteile Poly-$C_1$-$C_6$-alkylenterephthalat 10 bis 115 Massenanteile Glasfasern vorliegen.

2. Verwendung gemäß Anspruch 1, **dadurch gekennzeichnet dass** als Poly-$C_1$-$C_6$-alkylenterephthalat Polyethylenterephthalat oder Polybutylenterephthalat, insbesondere Polybutylenterephthalat, eingesetzt werden.

3. Verwendung gemäß Anspruch 1 oder 2, **dadurch gekennzeichnet, dass** auf 100 Massenanteile Poly-$C_1$-$C_6$-alkylenterephthalat, 10 bis 115 Massenanteile Glasfasern und 0,5 bis 30 Massenanteile wenigstens eines Copolymerisats aus wenigstens einem $\alpha$-Olefin und wenigstens einem Methacrylsäurester oder Acrylsäureester eines aliphatischen Alkohols eingesetzt werden.

4. Verwendung gemäß einem der Ansprüche 1 bis 3, **dadurch gekennzeichnet, dass** das Polyamid 6 zu 0,5 bis 15 Massenanteilen eingesetzt wird.

5. Verwendung gemäß einem der Ansprüche 3 oder 4, **dadurch gekennzeichnet, dass** als Copolymerisat wenigstens eines $\alpha$-Olefins und wenigstens eines Acrylsäureesters ein Copolymerisat aus Ethen und Acrylsäure-(2-ethyl)-hexylester oder ein Copolymerisat aus Ethen und Acrylsäurebutylester eingesetzt wird.

6. Verfahren zur Reduktion der bei 260°C nach ISO 11443 zu bestimmenden Schmelzviskosität und/oder des nach EN ISO 294-1 zu bestimmenden Fülldrucks von Zusammensetzungen und Formmassen worin auf 100 Massenanteile Poly-$C_1$-$C_6$-alkylenterephthalat, bevorzugt Polyethylenterephthalat (PET) oder Polybutylenterephthalat (PBT), insbesondere Polybutylenterephthalat, 10 bis 115 Massenanteile Glasfasern vorliegen, **dadurch gekennzeichnet, dass** man Polyamid 6 zusetzt, vorzugsweise Polyamid 6 in Mengen im Bereich von 0,5 bis 15 Massenanteilen.

7. Verfahren gemäß Anspruch 6, **dadurch gekennzeichnet, dass** als Poly-$C_1$-$C_6$-alkylenterephthalat, Polyethylenterephthalat oder Polybutylenterephthalat insbesondere Polybutylenterephthalat, eingesetzt wird.

8. Verfahren gemäß Anspruch 6 oder 7, **dadurch gekennzeichnet, dass** die Zusammensetzungen oder Formmassen zusätzlich 0,5 bis 30 Massenanteile wenigstens eines Copolymerisats aus wenigstens einem $\alpha$-Olefin und wenigstens einen Methacrylsäurester oder Acrylsäureester eines aliphatischen Alkohols enthalten.

9. Verfahren gemäß Anspruch 8, **dadurch gekennzeichnet, dass** als Copolymerisat Ethylenbutylacrylat Copolymer eingesetzt wird.

10. Zusammensetzungen, Formmassen und Erzeugnisse, enthaltend auf

    A) 100 Massenanteile Poly-$C_1$-$C_6$-alkylenterephthalat,
    B) 10 bis 115 Massenanteile Glasfasern,

C) 0,5 bis 15 Massenanteile Polyamid 6, und
D) 0,5 bis 30 Massenanteile wenigstens eines Copolymerisats aus wenigstens einem α-Olefin und wenigstens einen Methacrylsäurester oder Acrylsäureester eines aliphatischen Alkohols.

**11.** Zusammensetzungen, Formmassen und Erzeugnisse gemäß Anspruch 10, **dadurch gekennzeichnet, dass** als Komponente A) Polyethylenterephthalat (PET) oder Polybutylenterephthalat (PBT), insbesondere Polybutylenterephthalat, eingesetzt werden.

**12.** Zusammensetzungen, Formmassen und Erzeugnisse gemäß Anspruch 10 oder 11, **dadurch gekennzeichnet, dass** als Copolymerisat Ethylenbutylacrylat Copolymer eingesetzt wird.

**13.** Zusammensetzungen, Formmassen und Erzeugnisse gemäß einem oder mehreren der Ansprüche 10 bis 12, **dadurch gekennzeichnet, dass** diese in der Elektro- oder Elektronikindustrie, bevorzugt in der Elektromobilität, eingesetzt werden.

Europäisches Patentamt
European Patent Office
Office européen des brevets

# EUROPÄISCHER RECHERCHENBERICHT

Nummer der Anmeldung
EP 22 19 9602

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2004 027872 A1 (LANXESS DEUTSCHLAND GMBH [DE]) 5. Januar 2006 (2006-01-05)<br>* Absatz [0001]; Beispiel 3; Tabelle 1 *<br>* Absatz [0084] *<br>----- | 1-13 | INV.<br>C08L67/02 |
| Y | EP 1 790 692 A2 (LANXESS DEUTSCHLAND GMBH [DE]) 30. Mai 2007 (2007-05-30)<br>* Absatz [0001] *<br>* Absatz [0015] *<br>* Seite 14 - Seite 15 *<br>* Absatz [0008] *<br>* Absatz [0128] *<br>----- | 1-13 | |

RECHERCHIERTE SACHGEBIETE (IPC)
C08L

Der vorliegende Recherchenbericht wurde für alle Patentansprüche erstellt

1

| Recherchenort | Abschlußdatum der Recherche | Prüfer |
|---|---|---|
| Den Haag | 16. März 2023 | Adigbli, Francis |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 22 19 9602

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-03-2023

| Im Recherchenbericht angeführtes Patentdokument | Datum der Veröffentlichung | Mitglied(er) der Patentfamilie | Datum der Veröffentlichung |
|---|---|---|---|
| DE 102004027872 A1 | 05-01-2006 | CN 1965031 A | 16-05-2007 |
| | | DE 102004027872 A1 | 05-01-2006 |
| EP 1790692 A2 | 30-05-2007 | CN 1955221 A | 02-05-2007 |
| | | DE 102005050957 A1 | 26-04-2007 |
| | | EP 1790692 A2 | 30-05-2007 |
| | | JP 2007119781 A | 17-05-2007 |
| | | KR 20070044782 A | 30-04-2007 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102004027872 A1
- EP 1790692 A2
- WO 2005121245 A1
- DE 10324098 A1
- WO 2004009315 A1
- WO 2007116022 A2
- DE 102011084519 A1
- DE 2035390 A
- DE 2248242 A
- US 4937285 A
- DE 3704657 A
- DE 3704655 A
- DE 3631540 A
- DE 3631539 A


### In der Beschreibung aufgeführte Nicht-Patentliteratur


- Kunststoff-Handbuch. Karl Hanser Verlag, 1973, vol. VIII, 695
- *CHEMICAL ABSTRACTS,* 25038-59-9
- *CHEMICAL ABSTRACTS,* 24968-12-5
- **M. SCHOßIG.** Schädigungsmechanismen in faserverstärkten Kunststoffen. Vieweg und Teubner Verlag, 2011, vol. 1, 35
- *CHEMICAL ABSTRACTS,* 65997-17-3
- **J.KASTNER et al.** Quantitative Messung von Faserlängen und - verteilung in faserverstärkten Kunststoffteilen mittels μ-Röntgen-Computertomographie. *DGZfP-Jahrestagung,* 2007, 47
- **H. DOMININGHAUS.** Die Kunststoffe und ihre Eigenschaften. VDI-Verlag, 1976, 272
- *CHEMICAL ABSTRACTS,* 68604-44-4
- *CHEMICAL ABSTRACTS,* 85116-93-4
- *CHEMICAL ABSTRACTS,* 1592-23-0
- *CHEMICAL ABSTRACTS,* 74388-22-0
- *CHEMICAL ABSTRACTS,* 115-83-3
- *CHEMICAL ABSTRACTS,* 13463-67-7
- **C.M. KECK.** Moderne Pharmazeutische Technologie. Freie Universität Berlin, Juni 2007, 1-16
- *CHEMICAL ABSTRACTS,* 14807-96-6
- *CHEMICAL ABSTRACTS,* 98460-24-3
- *CHEMICAL ABSTRACTS,* 8013-07-8
- **SMITH ; MARCH.** March's Advanced Organic Chemistry. Wiley-Interscience, 2001
- **ULLMANN.** *Enzyklopädie der Technischen Chemie,* 1980, vol. 19, 280
- *CHEMICAL ABSTRACTS,* 68664-06-2
- *CHEMICAL ABSTRACTS,* 1078142-02-5
- *CHEMICAL ABSTRACTS,* 25134-01-4
- *CHEMICAL ABSTRACTS,* 35074-77-2
- *CHEMICAL ABSTRACTS,* 6683-19-8
- *CHEMICAL ABSTRACTS,* 90498-90-1
- *CHEMICAL ABSTRACTS,* 154862-43-8
- *CHEMICAL ABSTRACTS,* 38613-77-3
- **THIELEN ; HARTWIG ; GUST.** Blasformen von Kunststoffhohlkörpern. Carl Hanser Verlag, 2006, 127-129
- *CHEMICAL ABSTRACTS,* 649560-74-7